# EUROPEAN PATENT APPLICATION

(11) **EP 4 674 920 A1**
(43) Date of publication of application: **07.01.2026**
(21) Application number: 25186410.4
(22) Date of filing: 30.06.2025
(51) Int. Cl.: C09J 123/20, C08L 91/06

(54) **GLUE COMPATIBLE WITH COSMETIC PRODUCTS**

(30) Priority: 01.07.2024 IT 202400015196
(71) Applicant: Gotha cosmetics S.r.l., 24040 Lallio (BG) (IT)
(72) Inventor: COLATO, Luca, 24040 Lallio (BG) (IT); MORONI, Fabio, 24040 Lallio (BG) (IT); OLIVIERI, Laura, 24040 Lallio (BG) (IT)
(74) Representative: Rigamonti, Dorotea

(57) **Abstract**

The present invention concerns a glue for fixing a cosmetic product wafer without any support inside the specific preformed housing of a box. The glue comprises a microcrystalline wax and polybutene. A further object of the present invention is a process of packaging a cosmetic product wafer using said glue.

## Description

### TECHNICAL FIELD

The present invention refers to the cosmetic sector. In more detail, the present invention refers to a glue for use in packaging cosmetic products and a related process of packaging cosmetic products.

### STATE OF THE ART

In the cosmetics industry, particularly *make-up* products, it is known to package cosmetic products, such as anhydrous or compact powder wafers, by placing them inside a small container called a *compact-trousse,* or, briefly, *compact.* This type of container allows the cosmetic product to be carried along at all times; when needed, the user opens the container, uses the cosmetic product and then closes the container again. For example, lipsticks, concealers, eye shadows, blush and foundations can be anhydrous.

Since these containers are portable, it is important that the cosmetic product is well fixed to the container, so that, during transport or use, any impacts do not cause it to drop from the container itself, making it unusable for the end user and not marketable for the distribution chain.

For this reason, in this type of containers, the cosmetic products are provided with a baseplate that is glued to the container by means of a glue that can be of different chemical nature depending on the product and the materials to be glued.

In particular, the following glues are generally used in the state of the art that allow fixing the baseplate with the compact:
- cyanoacrylic glue, which has the advantage of being easily dosed at room temperature, without the use of complex dosing equipment, but has the disadvantage of withstanding little mechanical stress and, in the case of process automation, of being unmanageable given the short polymerization time;
- polyurethane or composite hot glue, which resists impacts and mechanical stresses better than cyanoacrylic, but has the disadvantage of having to be dosed with a dispenser heated to high temperatures, above 150 °C. Furthermore, this glue could have greater affinity (compatibility) with the cosmetic product and lose adhesive power if in contact with it, because the mixture between the glue and the cosmetic product could cause a loss of the adhesive properties of the glue itself.

Whatever glue is used, these are synthetic products sold by companies operating in different sectors (not just cosmetic one), so they are often not specific to the cosmetic sector. In addition, these products can often contain residues (such as volatile solvent residues) that are potentially toxic to operators who are exposed for long periods during production, and to users of the products. For this reason, the fixing of cosmetic products always takes place through a container (baseplate) that guarantees the physical separation between product and glue or when in the process of fixing between the baseplate and the compact there is contact between glue and product, it is necessary to carry out analyses on the release of any dangerous substances towards the cosmetic product to ensure an acceptable level of toxicological safety.

EP 3 323 866 B1 describes a glue which, among other ingredients, comprises polybutene and the microcrystalline wax and which is also suitable for applications in the cosmetic field.

The need is therefore felt for a glue and process of packaging cosmetic products that is safe and guarantees that the cosmetic product is well fixed to its container.

### OBJECTS AND SUMMARY OF THE INVENTION

An object of the present invention is to overcome the drawbacks of the prior art.

In particular, it is an object of the present invention to realize a glue that is safe from the toxicological point of view that does not release toxic or harmful substances in the cosmetic product in case of contact.

Furthermore, it is also an object of the present invention to make a glue that is safe and at the same time allows the secure fixing of a cosmetic product to its container.

In particular, it is an object of the present invention to allow a surface of the cosmetic product to be securely glued directly to a container, for example made of plastic, without the need to use a baseplate.

These and other objects of the present invention are achieved by a glue incorporating the features of the accompanying claims, which form an integral part of the present description.

According to a first aspect, the present invention is directed to a glue comprising, or consisting of: a mixture of a microcrystalline wax and a component of the polybutene family (by way of example but not limited to: polybutene, polyisobutene, hydrogenated polybutene and derivations thereof) preferably polybutene, wherein optionally both components are present in an amount between 15 and 85%, preferably between 35 and 65% by weight, more preferably 50% by weight.

This solution offers the advantage that the glue is produced with raw materials for cosmetic use, therefore subject to the controls and regulations of the cosmetic supply chain (e.g. absence or maximum limits of certain components such as heavy metals, CMR [carcinogenic, mutagenic, reprotoxic], etc...). As a result, this glue can be used to glue cosmetic products to their container without the need to study about the release of these substances when the glue comes into contact with the cosmetic product.

Furthermore, as the tests carried out demonstrate, the glue thus made guarantees greater gluing efficiency compared to the glues currently in use for the same purpose.

According to a further aspect, the present invention is directed to a process of packaging a cosmetic product in a container thereof, in particular a *compact-trousse.*

Further features and purposes of the present invention will become more evident from the description below.

### BRIEF DESCRIPTION OF THE DRAWINGS

The invention will be described hereinbelow with reference to some examples, provided by way of non-limiting example, and illustrated in the appended drawings. These drawings illustrate different aspects and embodiments of the present invention and reference numerals illustrating structures, components, materials and/or similar elements in different drawings are indicated by similar reference numerals, where appropriate.
Figure 1 illustrates a cosmetic product in the step of insertion into a container for cosmetic products comprising a glue according to the present invention;
Figure 2 illustrates a reference element present within the cosmetic product of figure 1;
Figure 3 illustrates a section of the cosmetic product inserted in the container of figure 1;
Figure 4 is a flowchart of a process of packaging a cosmetic product.

### DETAILED DESCRIPTION OF THE INVENTION

While the invention is susceptible to various modifications and alternative constructions, certain preferred embodiments are shown in the drawings and are described hereinbelow in detail. It must in any case be understood that there is no intention to limit the invention to the specific embodiment illustrated, but, on the contrary, the invention intends covering all the modifications, alternative and equivalent constructions that fall within the scope of the invention as defined in the claims.

The use of "for example", "etc.", "or" indicates non-exclusive alternatives without limitation, unless otherwise indicated. The use of "includes" means "includes, but not limited to" unless otherwise indicated.

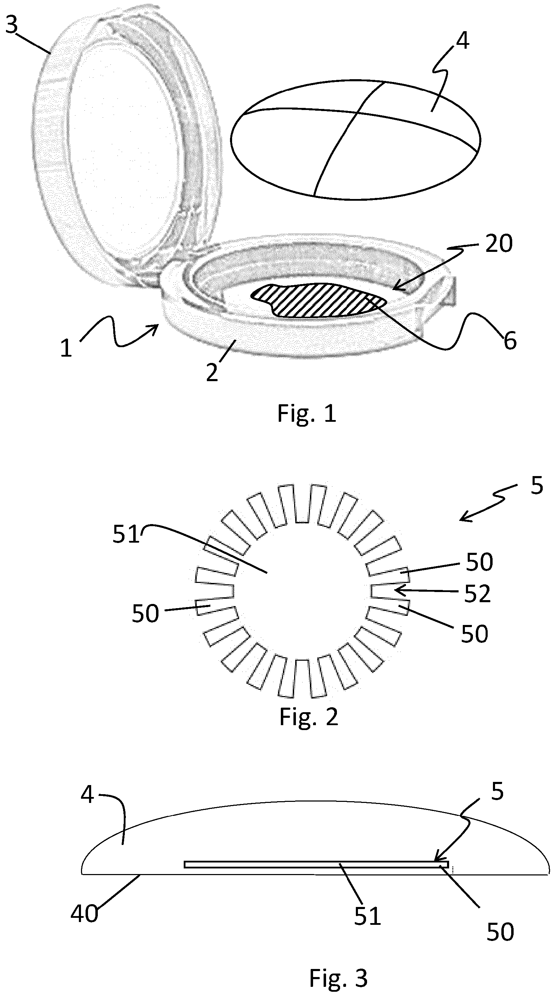

With reference to figure 1, a container 1 for cosmetic products is illustrated. The container 1, which in the example discussed here is called in jargon a compact, comprises a base 2 and a lid 3 hinged to the base 2.

The base 2 is preferably made of thermosetting or thermoplastic plastic material and comprises a housing 20 for receiving a cosmetic product 4 which, in the non-limiting example described herein, is presented as a compact wafer-shaped product, for example obtained by casting the cosmetic product in a mould, or by compacting cosmetic powders. In one embodiment, the cosmetic product may be an anhydrous product such as a blush, a concealer, an eyeshadow, a foundation, a lipstick or a gloss.

In the embodiment described herein, a reference element 5, visible in figures 2 and 3, is arranged inside the cosmetic product wafer 4, made of an inert material, i.e. a material that does not react upon contact with the material of the wafer. In particular, the reference element 5 can be made of a metallic material, for example aluminium or tinplate. In alternative embodiments, the baseplate can be made of another material, such as plastic material such as ABS, PET, PP.

In the example of figures 2 and 3, the reference element 5 is in the form of a thin disc, preferably less than one millimetre thick, with a plurality of radial elements 50 extending radially from a central body 51. Between two adjacent radial elements 50 there is a space 52 which, as described below, allows the reference element 5 to be more easily sunk into the wafer during production. The shape of the reference element 5 is not binding, so that said reference element 5 can have a rectangular or square shape, but preferably slab-like.

The presence of the reference element 5 allows the user, during use, to understand when she/he has reached the bottom of the wafer; therefore, the reference element is preferably arranged near the flat surface 40 of the wafer 4 which is intended to be glued to the container 1. Preferably, the reference element 5 is less than 5mm away from the surface 40.

Preferably, during the production step of the cosmetic product wafer 4, the cosmetic material constituting the wafer is arranged, for example cast, in a mould until a predetermined level is reached. Subsequently, the reference element 5 is rested on the free surface of the cosmetic material. Subsequently, another cosmetic material is deposited, for example cast, in the mould to cover the reference element. In this way, when the wafer is removed from the mould, the reference element is inside it.

The presence of the reference element 5, however, is not strictly necessary and the reference element 5 may be omitted, for example to reduce production costs.

The cosmetic product wafer 4, whether or not equipped with a reference element 5, is then glued into the housing 20 by means of a glue 6.

The glue 6 is a mixture of microcrystalline wax and polybutene, wherein optionally both components are present in an amount between 15% and 85%, preferably between 35% and 65%, by weight. More preferably the microcrystalline wax and the polybutene are both present in an amount of 50% by weight. Preferably, the glue 6 consists only of microcrystalline wax and polybutene.

To make the glue 6, the two components of the mixture are preferably mixed at 90 °C and then allowed to cool. More generally, the mixing of the components of the mixture can take place in a range between 85 °C and 130 °C. At room temperature of 20 °C, the glue appears as a white paste.

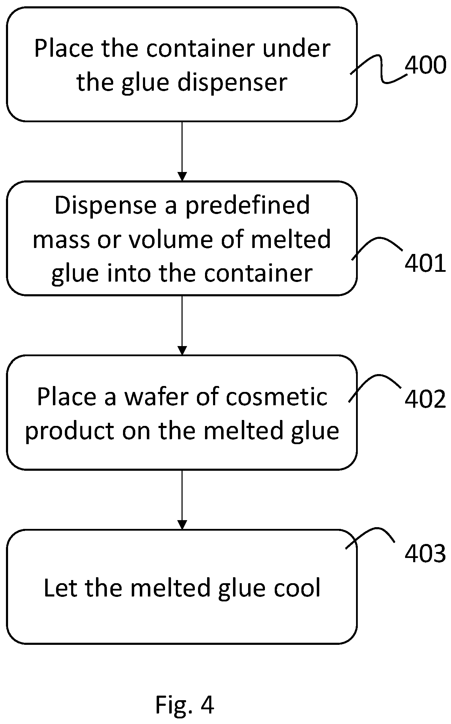

As illustrated in Figure 4, during the packaging step of the cosmetic product, the container 1 is positioned below a dispenser (step 400) capable of heating the glue to a temperature equal to or higher than 85 °C, and preferably lower than 130 °C, and dispensing a predefined mass or volume thereof.

A predefined mass or volume of molten glue is then poured by the dispenser (step 401) into the housing 20 of the container 1. The molten glue is preferably poured into the central portion of the housing 20.

Subsequently (step 402), the cosmetic wafer 4 is inserted into the housing 20 of the container 1, positioning the base surface 40 of the wafer 4, on the molten glue. Preferably, before positioning the wafer in the container, it is moved from under the dispenser to make room for another container.

The glue (step 403) is allowed to cool, so as to fix the cosmetic wafer 4 in place. Cooling can take place by means of a flow of cold air, or take place spontaneously by heat exchange with an environment at a temperature equal to or lower than 25 °C.

In light of the foregoing, the advantages offered by the present invention are apparent.

First of all, the glue is made with products for cosmetic use, therefore non-toxic for operators working in production, and not even for the consumer who uses the cosmetic product. To confirm the non-toxicity, the Applicant carried out numerous chemical analyses that confirmed its goodness. In particular, solvents/CMRs (carcinogenic, mutagenic and reprotoxic) were searched for with the headspace method and these were not found (i.e. no potentially dangerous substances are present).

The glue then has a high functionality from a physical-mechanical point of view; as from the results of the Drop/Incline and Transit tests described below, the glue allows an effective fixing of the cosmetic product wafer to its container.

This glue can then be used to glue different cosmetic products (from anhydrides to powders) to containers of a different shape, not necessarily compact ones such as in the example described above.

Although the glue allows a cosmetic product wafer to be glued directly to a housing of a container, the glue can still be used to glue a baseplate of a cosmetic product wafer to the container. It is, in fact, known that some cosmetic product wafers are provided with a baseplate, for example metallic, which protrudes from the wafer and is used to attach the wafer to the container. As shown in the examples below, the glue of the invention is effective not only in gluing a cosmetic product directly to the container (as shown in the 2nd block of experiments) but also in gluing a wafer with a metallic baseplate to the container (as shown in the 1st block of experiments).

### EXAMPLES

### Example 1 - Functionality tests of the glue of the invention

### 1.1 Preparation of the glue

First of all, a glue was prepared by mixing in a beaker the desired amounts of microcrystalline wax (ABWAX ^{®} MICRO LA 76 SLABS sold by BRASCA INDUSTRIAL S.r.l.) with polybutene (INDOPOL^{®} H-25 sold by INEOS Oligomers) in a 1/1 weight ratio at the temperature of 90 °C for at least half an hour. The product was allowed to cool.

After cooling, at 25 °C, the glue appeared as a white paste.

### 1.2 Preparation of the samples to be tested

After the glue was made, the samples to be tested were made.

Approximately 0.4 g of glue thus prepared was dosed from a dispenser heated to 115° ± 5 °C, directly into the housing (or well) of each *compact* container in ABS.

Subsequently, the cosmetic product wafer was placed on the glue, in detail an anhydrous cast (a blush). In the first block of tests conducted, the cosmetic product wafer was positioned on a tinplate metallic baseplate that came into contact with the glue, while in the second block of tests the wafer included inside it an aluminium reference element with the same shape as that of figures 2 and 3. In the second test block, therefore, the glue came into direct contact with the cosmetic product.

The glue was allowed to dry; already after 10 seconds it is already possible to manipulate the compact without causing damage.

Several samples were thus made consisting of a container inside which a cosmetic product wafer containing inside it a metallic reference element was glued.

### 1.3.1 Test execution - 1st block

To test the functionality of the glue, we maintained different groups of samples at different temperature conditions for different times, thus forming the following groups of samples:
(i) 25 °C after 24h,
(ii) 25 °C after 1 month,
(iii) 5 °C after 1 month,
(iv) 40 °C after 1 month;
(v) 50 °C after 1 month and
(vi) thermal cycle from 0 °C to 40 °C after 1 month.

For each temperature condition from (i) to (vi), the samples were tested according to the following internal development tests:
a) Drop USU: the *compact* is dropped vertically from a height of 30 cm with head up, i.e. with the lid facing upwards and the base downwards.
b) Drop USD: the *compact* is dropped vertically from a height of 30 cm upside with head down.
c) Incline test: this is a test that simulates a collision of the product on an inclined plane; in particular, the *compact* is slid on a trolley on a ramp inclined by 30° with respect to the horizontal plane and made to collide against a metallic wall placed perpendicular to the inclined plane itself.
d) Transit test: this is a test that simulates transport; in particular, by means of a vibrating table on which the product to be tested is placed.
e) Shipping test: this is a test that simulates the transport of samples packed in shipping boxes with a path of 10,000 km.

The following Table 1 reports the outcomes relative to part of the functional development tests. The outcome is indicated as the number of the drop that caused a detachment and the type of detachment and with the following abbreviations:
- SC: detachment of the wafer from the baseplate, it is an indication of the effectiveness of anchoring the wafer to the baseplate
- SF: detachment of the baseplate from the compact, it is an indication of the adhesive strength of the glue

In the absence of detachment after 10 drops, the test was interrupted and the outcome 10+ is reported in the table.

The final outcome of the tests is indicated as compliant when at the end of the tests the product has no variations or only slight variations in its appearance that are little visible and that do not affect the use of the product.

The final outcome of the tests is indicated as non-compliant when at the end of the tests the product has damage such as to compromise the use thereof.

**Table 1**

| **Glue of the invention** | t1m 25 °C | t1m 5 °C | t1m 40 °C | t1m 50 °C | t1m Cycle 0-40 °C |
|---|---|---|---|---|---|
| 1st Drop USU | 10+ | 10+ | 10+ | 8SC | 10+ |
| 2nd Drop USU | 10+ | 7SC | 10+ | 10+ | 10+ |
| 3rd Drop USU | 10+ | 10+ | 10+ | 10+ | 10+ |
| 4th Drop USU | 10+ | 6SC | 10+ | 10+ | 10+ |
| 5th Drop USU | 10+ | 10+ | 10+ | 10+ | 10+ |
| Final outcome Drop USU | Compliant | Compliant | Compliant | Compliant | Compliant |
| 1st Drop USD | 2SC | 1SC | 3SC | 6SF | - |
| 2nd Drop USD | 2SC | 1SC | 2SC | 4SC | 6SC |
| 3rd Drop USD | 3SC | 1SC | 3SC | 4SF | 5SC |
| 4th Drop USD | 3SC | 2SC | 2SC | 4SF | 4SC |
| 5th Drop USD | 2SC | 2SC | 4SC | 3SC | 7SC |
| Final outcome Drop USD | Compliant | Not compliant | Compliant | Compliant | Compliant |
| 1st Incline | 5SC | 5SC | 5SC | 4SC | 4SC |
| 2nd Incline | 6SC | 4SC | 5SC | 5SC | 5SC |
| 3rd Incline | 6SC | 4SC | 7SC | 5SC | 6SC |
| 4th Incline | 4SC | 6SC | 5SC | 5SC | 5SC |
| 5th Incline | 7SC | 5SC | 6SC | 5SC | 5SC |
| Final outcome Incline | Compliant | Compliant | Compliant | Compliant | Compliant |
| 1st Transit | OK | OK | OK | OK | OK |
| 2nd Transit | OK | OK | OK | OK | OK |
| 3rd Transit | OK | OK | OK | OK | OK |
| 4th Transit | OK | OK | OK | OK | OK |
| 5th Transit | OK | OK | OK | OK | OK |
| Final outcome Transit | Compliant | Compliant | Compliant | Compliant | Compliant |

The tests have therefore demonstrated that only in very few cases have there been critical detachments of the cosmetic product wafer from the container.

The detachments of the baseplate were found only at 50 °C and in non-standard conditions of transport / use, therefore not very critical for the purpose.

The incline test provides excellent outcomes, probably because the glue is more plastic and better attenuates impacts, compared to cyanoacrylic, which very often causes a real detachment.

The transit test gives positive results.

### 1.3.2 Test execution - 2nd block

In the following part the experiments relative to a second block of functional development tests are reported.

In particular, a glue (Glue B) was prepared that contains a different percentage composition of the two components compared to that prepared as reported in paragraph 1.1 above (hereinafter referred to as "Glue 1").

Glue B: mixture of 65% w/w microcrystalline wax (ABWAX^{®} MICRO LA 76 SLABS sold by BRASCA INDUSTRIAL S.r.l.) with 35% w/w polybutene (INDOPOL^{®} H-25 sold by INEOS Oligomers)

These two glues were examined in the tests reported above by choosing the riskiest compact format to be tested (diameter 57 mm, weight 16 g).

Although both glues are the mixture of two cosmetic ingredients with their own chemical-physical characteristics (not adhesive in themselves), they have demonstrated to have adhesive power suitable for the purpose (gluing product wafers without support to the compact of the cosmetic product).

This has been demonstrated by standard drop test data in compacts that are compliant. Even the incline test, despite highlighting in one case a displacement of the wafer, does not highlight a clear detachment of the same from the compact, thus making the product still usable.

The following Table 2 reports the outcomes of the Shipping test carried out with the two glues, whose composition is as the one reported above. The percentage indicates what percentage of samples showed some changes from the beginning to the end of the test.

**Table 2**

| **Glue of the invention** | **Shipping test** |
|---|---|
| Glue 1 | 0% |
| Final outcome | Compliant |
| Glue B | 25% |
| Final outcome | Compliant |

In the Shipping test, 25% of samples of Glue B that were found changed from the beginning to the end of the test show only a slight displacement of the wafer, but do not highlight a clear detachment of the same from the compact, thus making the product still usable and the outcome of the test as compliant.

### Comparison Example 2 - Functionality tests of the cyanoacrylic glue

Samples were prepared using the same type of container *(compact)* and the same type of cosmetic product as Example 1 described above.

However, in this case, the wafer was equipped with a baseplate of thermoplastic material (ABS -Acrylonitrile-Butadiene-Styrene) and a cyanoacrylic glue (Loxeal 43S) was used for fixing.

The samples thus assembled were subjected to the same tests used in the previous Example 1.

The following Table 3 reports the outcomes relative to the functional tests of this assembled product with cyanoacrylic glue.

**Table 3**

| **Standard glue** | t24h 25 °C | t1m 25 °C | t1m 5 °C | t1m 40 °C | t1m 50 °C | t1m Cycle 0-40 °C |
|---|---|---|---|---|---|---|
| 1st Drop USU | 6SC | 1SC | 10+ | 10+ | 10+ | 10+ |
| 2nd Drop USU | 10+ | 4SC | 2SC | 10+ | 10+ | 10+ |
| 3rd Drop USU | 1SC | 2SC | 10+ | 10+ | 10+ | 10+ |
| 4th Drop USU | 4SC | 1SC | 6SC | 10+ | 10+ | 10+ |
| 5th Drop USU | 10+ | 5SC | 6SC | 10+ | 10+ | 10+ |
| Outcome Drop USU | Not compliant | Not compliant | Not compliant | Compliant | Compliant | Compliant |
| 1st Drop USD | 2SC | 1SC | 1SC | 9SC | 10+ | 3SC |
| 2nd Drop USD | 4SC | 4SC | 2SC | 8SC | 10+ | 3SF |
| 3rd Drop USD | 1SC | 1SC | 1SC | 10SC | 3SF | 3SC |
| 4th Drop USD | 1SC | 1SC | 2SC | 10+ | 10+ | 2SF |
| 5th Drop USD | 2SC | 1SC | 1SC | 10+ | 10+ | 1SC |
| Outcome Drop USD | Not compliant | Not compliant | Not compliant | Compliant | Compliant | Not compliant |
| 1st Incline | 3+ | X | OK | OK | OK | OK |
| 2nd Incline | 3+ | X | X | OK | OK | OK |
| 3rd Incline | 3+ | OK | OK | OK | OK | OK |
| 4th Incline | 3+ | X | OK | OK | OK | OK |
| 5th Incline | 3+ | X | OK | OK | OK | OK |
| Outcome Incline | Compliant | Not compliant | Not compliant | Compliant | Compliant | Compliant |
| 1st Transit | OK | OK | OK | OK | OK | OK |
| 2nd Transit | OK | OK | OK | OK | OK | OK |
| 3rd Transit | OK | OK | OK | OK | OK | OK |
| 4th Transit | OK | OK | OK | OK | OK | OK |
| 5th Transit | OK | OK | OK | OK | OK | OK |
| Outcome Transit | Compliant | Compliant | Compliant | Compliant | Compliant | Compliant |

| | | | | | | |
|---|---|---|---|---|---|---|
| **Outcome on** **140pcs** | | | | | | |

Evaluating the results, only in a few cases the detachment of the baseplate (SF) occurs.

The greatest criticalities occur only for the drop with head down (riskier) and in the most critical conditions (50 °C and thermal cycle), in non-standard conditions of transport / use, therefore not very critical for the purpose.

## Claims

1. A glue comprising a mixture of microcrystalline wax and polybutene, wherein optionally both components are present in an amount between 15% and 85%, preferably between 35% and 65%, by weight.

2. The glue according to claim 1, consisting of a mixture of microcrystalline wax and polybutene.

3. The glue according to any one of claims 1 or 2, wherein the microcrystalline wax is present in an amount between 40 % and 60 % by weight and polybutene in an amount between 60 % and 40 % by weight.

4. The glue according to any of the preceding claims, wherein the microcrystalline wax and polybutene are both present in an amount of 50 % by weight.

5. A process for preparing the glue according to any one of claims 1 to 4, wherein the microcrystalline wax and polybutene are mixed at a temperature of 85 °C to 130 °C and preferably 90 °C.

6. A process of packaging a cosmetic product wafer, in which the steps are provided for:
- preparing a container (1) equipped with a housing (20)
- preparing a wafer (4) of a cosmetic product,
**characterised by**
directly gluing a base surface (40) of the wafer (4) to the housing (20) of the container by means of a glue (6),
wherein the glue is a glue according to any one of claims 1 to 4.

7. The process of packaging a cosmetic product wafer according to claim 6, wherein the glue is a mixture of a microcrystalline wax and polybutene.

8. The process according to claim 6 or 7, wherein the glue is melted and dosed melted into the container housing.

9. Process according to claim 6-8, wherein the wafer comprises inside it a reference element (5) made of an inert material.

10. Process according to claim 9, wherein the reference element (5) is made of plastic or metallic material, preferably aluminium.

11. Process according to any one of claims 6 to 9, wherein the housing (20) of the container (1) is made of thermoplastic or thermosetting material.
